# FASCICULE DE BREVET EUROPEEN

(11) **EP 1 386 692 B1**
(45) Date de publication et mention de la délivrance du brevet: **21.09.2005**
(21) Numéro de dépôt: 03291627.2
(22) Date de dépôt: 02.07.2003
(51) Int. Cl.: B23Q 5/56, B23Q 5/38, F16H 55/28, B23Q 11/12

(54) **Dispositif d'entrainement pour machine-outil**
Antriebsvorrichtung für Werkzeugmaschinen
Drive device for machine tools

(30) Priorité: 01.08.2002 FR 0209814
(43) Date de publication de la demande: 04.02.2004
(73) Titulaire: REDEX, 45210 Ferrieres (FR)
(72) Inventeur: Casanova, Pierre, 45200 Montargis (FR); Vaslier, Pierre, 45270 Ladon (FR); Tetart, Jean-Bernard, 91450 Etiolles (FR)
(74) Mandataire: Robert, Jean-Pierre

(56) Documents cités:
- GB-A- 1 041 793
- US-A- 2 946 232
- US-A- 4 554 842
- US-A- 4 714 388

## Description

La présente invention concerne un dispositif d'entraînement interposé entre un moteur et un élément de machine-outil pour animer d'un mouvement rectiligne cet élément de machine par rapport à un bâti, tel que décrit par example dans US 2946232 A.

D'une manière connue un tel dispositif d'entraînement comporte une boîte de transmission avec un rapport de réduction associée à une platine de fixation à un élément mobile de machine-outil, dont l'entrée est accouplée à un moteur et dont la sortie est formée par deux roues dentées ou pignons tournant en synchronisme et engrenant avec une crémaillère solidaire du bâti de la machine et s'étendant parallèlement à la direction du mouvement rectiligne.

Cette sortie par deux roues dentées permet, en introduisant dans la chaîne de transmission qui relie les deux roues un couple tendant à faire tourner les deux roues dentées en sens inverse, de réaliser un rattrapage dé jeu permanent garant d'une certaine précision dans l'amplitude du mouvement rectiligne réalisé et la position de ses bornes.

Dans un dispositif connu de ce type, la chaîne cinématique se compose d'un arbre d'entrée attaquant par deux renvois d'angle en série sur cet arbre, chacun des arbres d'entrée d'un réducteur dont les sorties portent les pignons ou roues dentées susdites. La précharge est obtenue par une barre de torsion qui forme une partie de l'arbre d'entrée entre les renvois d'angle. La valeur de cette précharge est fixée à l'installation du dispositif sur la machine alors que les pignons sont en prise avec la crémaillère, en contraignant en torsion la barre, accessibles par une extrémité de dispositif opposée au moteur d'entraînement et en calant en rotation l'un et/ou l'autre des renvois d'angle sur cette barre précontrainte.

L'architecture de ce dispositif induit un certain nombre d'inconvénients au sens où elle constitue une limitation à la standardisation de la fabrication de ses composants et une limitation à la raideur de la transmission qui doit être aussi élevée que possible pour la précision de la commande du mouvement.

Par la présente invention, en entend remédier à ces inconvénients et procurer des avantages supplémentaires à des mécanismes d'entraînement de ce type.

A cet effet, l'invention a donc pour objet un dispositif d'entraînement pour machine-outil comprenant dans un bâti :
- une ligne d'arbres d'entrée,
- un premier et un second renvois d'angle, ayant chacun un arbre de sortie perpendiculaire à la ligne d'arbres d'entrée,
- chaque arbre de sortie étant accouplé à l'entrée d'un train d'engrenage réversible dont l'arbre de sortie comporte un pignon, les deux pignons étant destinés à engrener avec une crémaillère,
dans lequel la ligne d'arbres d'entrée comporte deux arbres alignés, accouplés bout à bout par un organe de transmission de couple à déformation élastique en torsion possédant des moyens débrayables de liaison en rotation à l'un au moins des arbres tandis que l'autre extrémité de cet arbre est pourvu de moyens de prise pour sa manoeuvre en rotation.

La liaison par l'organe d'accouplement élastique en torsion entre les deux arbres permet de rendre totalement symétrique le dispositif d'entraînement, ce qui d'une part, permet une rationalisation de la fabrication de ses composants et d'autre part augmente ses possibilités d'adaptation tant à l'élément de machine-outil qui doit le recevoir qu'à l'élément d'entraînement moteur auquel il doit être accouplé.

D'autres caractéristiques et avantages du dispositif selon l'invention ressortiront de sa description donnée ci-après à titre d'exemple non limitatif.

Il sera fait référence aux dessins annexés, parmi lesquels :
- la figure 1 est une vue générale en coupe du dispositif d'entraînement selon l'invention,
- les figures 2 et 3 sont deux vues extérieures en perspective de ce dispositif.

Le dispositif représenté à ces dessins comporte un bâti 1 formé de trois composants assemblés. Le composant principal 2 de ce bâti est un corps en forme de parallélépipède contenant deux paliers 3 et 4 pour deux arbres de sortie 5 et 6 dont l'extrémité 5a, 6a faisant saillie à l'extérieur d'une face 2a de cet élément forme deux pignons ou roues dentées 7 et 8.

L'élément 2 de bâti porte à l'opposé de sa face 2a, le second composant du bâti à savoir des couronnes fixes 9 et 10 de deux réducteurs hypocycloïdaux dont les arbres 5 et 6 forment les sorties.

Enfin, le troisième composant du bâti comprend deux carters 11, 12 qui renferment chacun les paliers d'un système d'engrenage à renvoi d'angle 13, 14, 15, 16 avec chacun un arbre d'entrée 17a, 17b et un arbre de sortie 18a, 18b, chacun de ces derniers constituant l'arbre d'entrée du réducteur hypocycloïdal 9, 10, correspondant.

Les arbres d'entrée 17a, 17b des renvois d'angle possèdent des extrémités à l'extérieur des carters 11, 12 correspondants et ces arbres sont alignés bout à bout. Leur accouplement est assuré par un organe de transmission de couple 19 connu en lui-même, qui permet de tolérer un certain désalignement des arbres et, surtout, qui admet une déformation élastique en torsion. Cet organe d'accouplement est de longueur axiale réduite et fixé à deux brides 20 et 21, la bride 20 étant clavetée sur l'extrémité de l'arbre 17a tandis que la bride 21 est calée en rotation sur l'extrémité d'arbre 17b au moyen d'un organe à débrayage 22 qui permet d'assurer un frettage de la bride 21 sur l'extrémité d'arbre 17b.

L'extrémité d'entrée de l'arbre 17a opposée à l'organe 19 est destinée à être accouplée à un moteur d'entraînement tandis que l'extrémité de sortie de l'arbre 17b opposée à l'organe 19 peut accueillir de manière amovible un organe 23 pour sa manoeuvre manuelle en rotation, par exemple un organe de prise coopérant avec l'arbre 17b par une clavette et présentant une surface extérieure polygonale pour coopérer avec un outil du genre clé et de préférence clé dynamométrique.

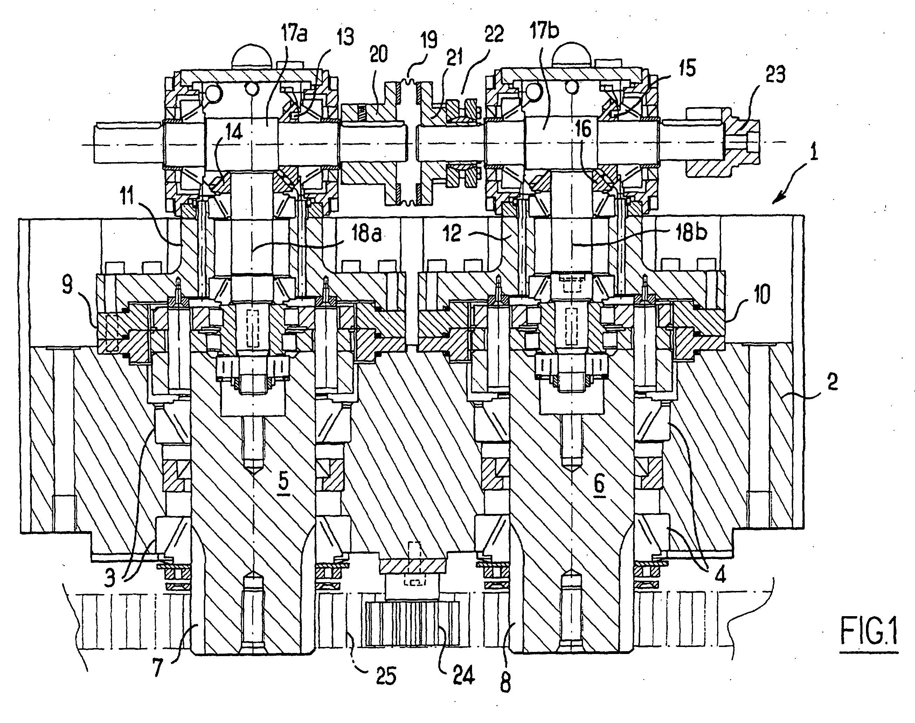

On notera enfin la présence d'un pignon 24 monté fou sur l'élément de bâti 2 pour, comme les pignons 7 et 8, engrener avec une crémaillère 25 représentée schématiquement à la figure 1. Ce pignon 24 peut être en une matière du genre feutre formant une réserve pour de l'huile de graissage à déposer sur la crémaillère 25.

Lorsque le dispositif de l'invention engrène avec la crémaillère 25 tout en étant fixé à l'élément de la machine-outil qu'il doit mouvoir, il est nécessaire pour obtenir une bonne précision dans les mouvements et surtout une bonne précision dans les positions atteintes à la fin de ces mouvements, de supprimer tous les jeux de fonctionnement de la chaîne cinématique. Cette suppression se fait de manière connue en installant et maintenant de manière permanente une contrainte de torsion dans la chaîne cinématique qui relie les deux pignons 7 et 8 de manière que ceux-ci soient soumis à l'effet d'un couple antagoniste qui est encaissé par la crémaillère 25.

Dans le cas de l'invention, l'installation de cette contrainte de torsion ou précharge est réalisée en débrayant la liaison 22 de l'arbre 17b, en bloquant en rotation la bride 21, par exemple au moyen d'une clé spéciale qui coopère avec le bâti 1, et en faisant tourner au moyen de l'organe d'entraînement 23 cet arbre 17b jusqu'à l'obtention d'un couple résistant sur cet organe 23 déterminé. Dans cette position, on a accumulé une contrainte en torsion dans l'organe de transmission 19 et on assure la liaison de l'arbre 17b à l'organe de transmission 19 par action sur l'organe 22. Cette contrainte de torsion est accompagnée d'une déformation élastique en torsion de l'organe 19 qui forme alors ressort de rattrapage des jeux entre les pignons 7 et 8. Bien entendu on aura noté que cette installation de précharge n'est possible que si les pignons 7 et 8 sont en prise avec une crémaillère 25.

L'organe 19 est très compact, de longueur axiale extrêmement réduite et de raideur très grande. Il s'ensuit que, contrairement à la technique antérieure qui mettait en oeuvre entre les arbres 17a et 17b une barre de torsion, une très grande raideur dans la chaîne cinématique, ce qui est un avantage sur le plan des vibrations.

On constate également que tous les éléments de transmission relatifs au pignon 7 sont identiques aux éléments semblables relatifs au pignon 8. Cette particularité est une conséquence de la mise en oeuvre de l'organe d'accouplement tel que 19 entre les arbres 17a et 17b, au lieu d'une barre de torsion, et permet une plus grande rationalisation de la fabrication.

On notera enfin que l'élément 2 de bâti offre en dehors de la face 2a et de la face opposée le long de laquelle la ligne d'arbres 17a et 17b est constituée, des surfaces 2b, 2c, 2d et 2e qui forment autant de plans de pose du dispositif sur un élément de machine-outil.

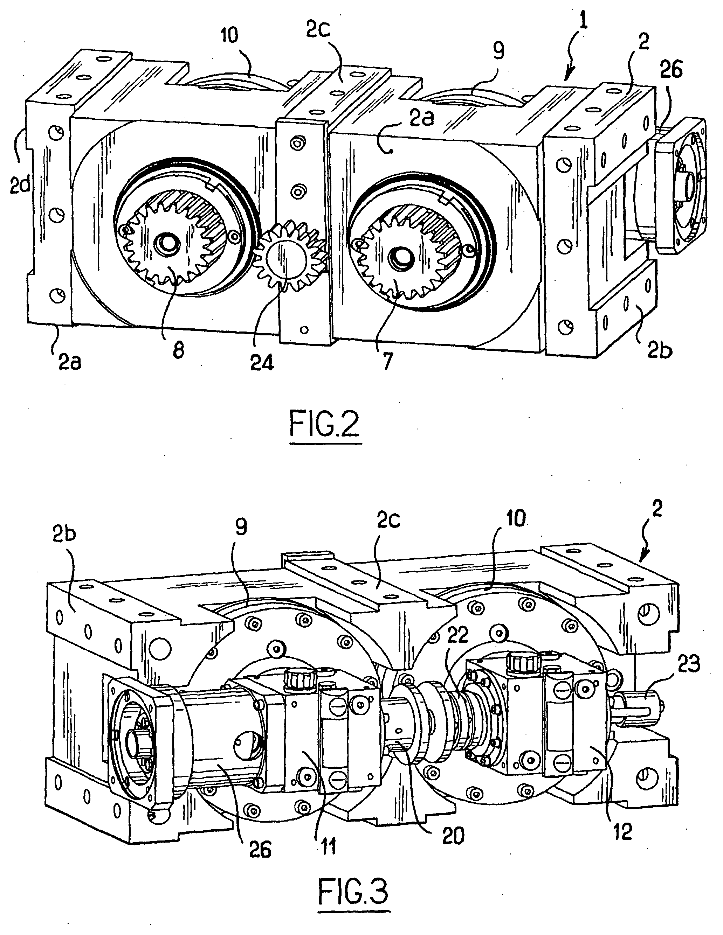

Aux figures 2 et 3 on constate également la présence d'un manchon 26 qui vient entourer l'extrémité de l'arbre 17a, ce manchon 26 servant à la pose d'un moteur d'entraînement qui sera accouplé à cette extrémité d'entrée au moyen d'un dispositif de liaison à brides du même type que celui 19, 20 et 21 décrit précédemment.

La description donnée ci-dessus se réfère à un réducteur à train d'engrenage hypocycloïdal. L'invention bien entendu concerne tout réducteur autre tel qu'un train d'engrenage planétaire dans la mesure où il est réversible.

## Revendications

1. Dispositif d'entraînement pour machine-outil comprenant, dans un bâti (1) :
- une ligne d'arbres (17a, 17b) d'entrée,
- un premier (13, 14) et un second (15, 16) renvois d'angle, ayant chacun un arbre de sortie (18a, 18b) perpendiculaire à la ligne d'arbres (17a, 17b) d'entrée,
- chaque arbre de sortie étant accouplé à l'entrée d'un train d'engrenage (9, 10) réversible dont l'arbre de sortie (5, 6) comporte un pignon (7, 8), les deux pignons (7, 8) étant destinés à engrener avec une crémaillère (25),
**caractérisé en ce que** la ligne d'arbre (17a, 17b d'entrée comporte deux arbres alignés, accouplés bout à bout par un organe (19) de transmission de couple à déformation élastique en torsion, possédant des moyens débrayables (22) de liaison en rotation à l'un au moins des arbres (17a, 17b) et **en ce que** l'autre extrémité de cet arbre (17b) est pourvu de moyens (23) amovibles de prise pour sa manoeuvre en rotation.

2. Dispositif selon la revendication 1, **caractérisé en ce que** les arbres (17a, 17b) de la ligne d'arbre d'entrée et les renvois d'angle (13, 14, 15, 16) avec leur carter (11, 12) sont identiques.

3. Dispositif selon la revendication 2, **caractérisé en ce que** les extrémités d'accouplement des deux arbres (17a, 17b) de la ligne d'arbre d'entrée sont identiques.

4. Dispositif selon l'une quelconque des revendications précédentes, **caractérisé en ce que** le bâti (1) comporte un élément principal (2) sensiblement parallélépipédique avec le long de l'une des ses faces la ligne d'arbre d'entrée (17a, 17b) et avec, en saillie de la face opposée (2a) parallèle à la précédente, les pignons de sortie (7, 8), les quatre autres faces (2b, 2c, 2d, 2e) formant des faces de fixation du dispositif à la machine-outil.

5. Dispositif selon l'une quelconque des revendications précédentes, **caractérisé en ce que**, à l'exception du boîtier (2) et de l'organe (19) de transmission de couple, les organes d'entraînement et de support relatifs à un pignon, y compris ce dernier, sont identiques à ceux relatifs à l'autre pignon.

6. Dispositif selon l'une quelconque des revendications précédentes, **caractérisé en ce qu'**il comporte un pignon huileur (24) monté fou sur le bâti entre les deux pignons (7, 8).

## Patentansprüche

1. Antriebsvorrichtung für eine Werkzeugmaschine, wobei die Antriebsvorrichtung in einem Rahmen (1) umfasst:
- einen Strang von Antriebswellen (17a, 17b),
- einen ersten Winkeltrieb (13, 14) und einen zweiten Winkeltrieb (15, 16), die jeweils eine zum Strang von Antriebswellen (17a, 17b) senkrechte Abtriebswelle (18a, 18b) haben,
- wobei jede Abtriebswelle an den Eingang eines Wendegetriebes (9, 10) gekoppelt ist, dessen Abtriebswelle (5, 6) ein Ritzel (7, 8) umfasst, wobei die beiden Ritzel (7, 8) dazu bestimmt sind, in eine Zahnstange (25) einzugreifen,
**dadurch gekennzeichnet, dass** der Strang von Antriebswellen (17a, 17b) zwei fluchtende Wellen umfasst, die mit ihren Enden über ein Drehmomentübertragungselement (19) mit elastischer Verdrehverformung gekoppelt sind, das ausrückbare Mittel (22) zur Drehverbindung mit mindestens einer der Wellen (17a, 17b) besitzt, und dass das andere Ende dieser Welle (17b) mit lösbaren Eingriffsmitteln (23) für seine Drehbewegung versehen ist.

2. Vorrichtung nach Anspruch 1, **dadurch gekennzeichnet, dass** die Wellen (17a, 17b) des Antriebswellenstranges und die Winkeltriebe (13, 14, 15, 16) mit ihren Gehäusen (11, 12) identisch sind.

3. Vorrichtung nach Anspruch 2, **dadurch gekennzeichnet, dass** die Kupplungsenden der beiden Wellen (17a, 17b) des Antriebswellenstranges identisch sind.

4. Vorrichtung nach einem der der vorhergehenden Ansprüche, **dadurch gekennzeichnet, dass** der Rahmen (1) ein Hauptelement (2) umfasst, das im wesentlichen ein Parallelepiped bildet, wobei entlang einer seiner Flächen der Strang von Antriebswellen (17a, 17b) verläuft und von der zu ihr parallelen gegenüberliegenden Fläche (2a) die Abtriebsritzel (7, 8) abstehen und wobei die vier anderen Flächen (2b, 2c, 2d, 2e) Befestigungsflächen zur Befestigung der Vorrichtung an der Werkzeugmaschine bilden.

5. Vorrichtung nach einem der vorhergehenden Ansprüche, **dadurch gekennzeichnet, dass** mit Ausnahme des Gehäuses (2) und des Drehmomentübertragungselements (19) die Antriebselemente und die Stützelemente bezüglich eines Ritzels, einschließlich dieses letzteren, identisch zu denjenigen bezüglich des anderen Ritzels sind.

6. Vorrichtung nach einem der vorhergehenden Ansprüche, **dadurch gekennzeichnet, dass** sie ein Schmierritzel (24) umfasst, das an dem Rahmen zwischen den beiden Ritzeln (7, 8) frei drehbar gelagert ist.

## Claims

1. A drive device for a machine tool, the device comprising in a structure (1):
- a line of inlet shafts (17a, 17b);
- first and second angle takeoffs (13, 14, 15, 16) each having a respective outlet shaft (18a, 18b) perpendicular to the line of inlet shafts (17a, 17b); and
- each outlet shaft being coupled to the inlet of a reversible gearbox (9, 10) whose outlet shaft (5, 6) carries a pinion (7, 8), the two pinions (7, 8) being for meshing with a rack (25),
the device being **characterized in that** the line of inlet shafts (17a, 17b) comprises two shafts in alignment that are coupled together end to end by a torque transmission member (19) that is elastically deformable in torsion, possessing declutchable means (22) for connection in rotation to at least one of the shafts (17a, 17b), and **in that** the other end of said shaft (17b) is provided with releasable engagement means (23) enabling it to be turned.

2. A device according to claim 1, **characterized in that** the shafts (17a, 17b) of the line of inlet shafts and the angle takeoffs (13, 14, 15, 16) and their cases (11, 12) are identical.

3. A device according to claim 2, **characterized in that** the coupling ends of the two shafts (17a, 17b) of the line of inlet shafts are identical.

4. A device according to any preceding claim, **characterized in that** the structure (1) comprises a main element (2) that is substantially in the form of a rectangular parallelepiped with the line of inlet shafts (17a, 17b) extending along one of its faces and with the outlet pinions (7, 8) projecting from the opposite face (2a) parallel to the preceding face, the other four faces (2b, 2c, 2d, 2e) forming faces suitable for fixing the device to a machine tool.

5. A device according to any preceding claim, **characterized in that** with the exception of the structure (2) and the torque transmission member (19), the drive and support members relating to either pinion, including said pinion, are identical to the corresponding members relating to the other pinion.

6. A device according to any preceding claim, **characterized in that** it includes an oiling pinion (24) mounted loose on the structure between the two said pinions (7, 8).
